(19) Europäisches Patentamt
European Patent Office
Office européen des brevets

(11) **EP 4 201 700 B1**

(12) **EUROPEAN PATENT SPECIFICATION**

(45) Date of publication and mention
of the grant of the patent:
**01.05.2024 Bulletin 2024/18**

(21) Application number: **22209560.6**

(22) Date of filing: **25.11.2022**

(51) International Patent Classification (IPC):
*B60C 1/00* *(2006.01)*      *C08L 23/28* *(2006.01)*
*B60C 5/14* *(2006.01)*      *B60C 11/00* *(2006.01)*

(52) Cooperative Patent Classification (CPC):
(C-Sets available)
**C08L 23/283; B60C 1/00; B60C 1/0008;
B60C 1/0016; B60C 5/14; B60C 11/005;**
B60C 2011/0033; Y02T 10/86           (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.12.2021 JP 2021212608**

(43) Date of publication of application:
**28.06.2023 Bulletin 2023/26**

(73) Proprietor: **Sumitomo Rubber Industries, Ltd.
Kobe-shi, Hyogo 651-0072 (JP)**

(72) Inventor: **AOKI, Daichi
Kobe-shi (JP)**

(74) Representative: **TBK
Bavariaring 4-6
80336 München (DE)**

(56) References cited:
**JP-A- 2005 343 379      JP-A- 2014 118 108
US-A1- 2017 151 834**

(52) Cooperative Patent Classification (CPC): (Cont.)

C-Sets
**C08L 23/283, C08L 9/06, C08L 91/08, C08L 25/16,
C08K 3/04, C08K 5/3437, C08K 5/09, C08K 3/22,
C08K 3/06, C08K 5/47;
C08L 23/283, C08L 23/22, C08L 91/08,
C08L 25/16, C08K 3/04, C08K 5/3437, C08K 5/09,
C08K 3/22, C08K 3/06, C08K 5/47**

**Description**

TECHNICAL FIELD

The present invention relates to a tire.

BACKGROUND OF THE INVENTION

A reduction in heat generation on an inner liner is also required in order to improve fuel efficiency of a tire. JP 2017-218147 A describes a rubber composition for inner liner having excellent steering stability, fuel efficiency, and a balance of physical properties while maintaining air permeation resistance and durability. JP 2005 343379 A relates to a pneumatic tire having an inner liner, which provides improved crack resistance. US 2017/151834 A1 relates to a pneumatic tire including an inner liner, which provides increased air permeability resistance by increased adhesive property, reduced rolling resistance by weight reduction of the tire, and improved low temperature durability. JP 2014 118108 A relates to a pneumatic tire including an inner liner, which provides increased air permeability resistance, reduced rolling resistance, and improved crack resistance.

SUMMARY OF THE INVENTION

However, from the viewpoint of increasing recyclability of a tire, there is a trend of promotion of retreading in which a tread part of a used tire is replaced for reusing the used tire, and thus it is considered that a member such as an inner liner of the tire is required to have a longer lifespan. On the other hand, when heat generation on the inner liner is reduced, it becomes difficult to absorb impact applied to the tire inside the inner liner, and crack or the like occurs inside the tire during running for a long period of time, which causes a concern about deterioration of air retention properties.

An object of the present invention is to provide a tire having improved crack resistance.

As a result of intensive studies, it has been found that the above-described problem can be solved by setting elongation at break and loss tangent of a rubber composition forming an inner liner and a distance from a crown part of a tread to a tire inner cavity surface to have a predetermined relationship.

That is, the present invention relates to:

a tire comprising a tread and an inner liner,
wherein the inner liner is formed of a rubber composition comprising a polymer component,
wherein a distance G from a crown part of the tread to a tire inner cavity surface is 9.0 mm or less,
wherein an elongation at break of the rubber composition measured under a condition of a temperature at 80°C and a tension rate of 3.3 mm/sec (80°CEB), a loss tangent tang $\delta$ of the rubber composition measured under a condition of a temperature at 70°C, a frequency of 10 Hz, an initial strain of 10%, and a dynamic strain of $\pm$ 2.5% (70°C tan $\delta$), and G (mm) satisfy inequalities (1) and (2) described below.

$$80°CEB/70°C \tan \delta \geq 2600 \quad \cdots \quad (1)$$

$$80°CEB/G \geq 40 \quad \cdots \quad (2)$$

According to the present invention, provided is a tire having improved crack resistance.

BRIEF DESCRIPTION OF THE DRAWINGS

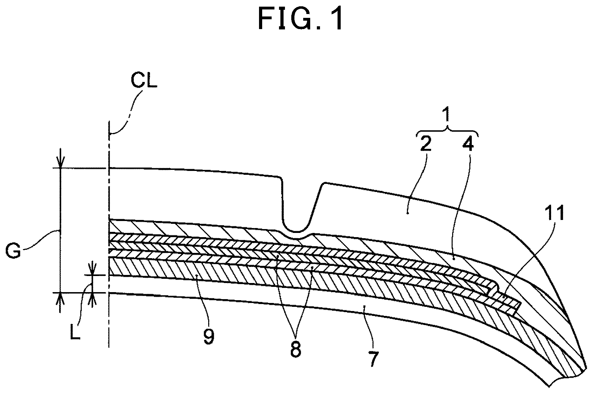

FIG. 1 is a cross-sectional view of a part of a tire according to one embodiment of the present invention.

DETAILED DESCRIPTION

The tire that is one embodiment of the present invention is a tire comprising a tread and an inner liner,

wherein the inner liner is formed of a rubber composition comprising a polymer component,
wherein a distance G from a crown part of the tread to a tire inner cavity surface is 9.0 mm or less,
wherein an elongation at break of the rubber composition measured under a condition of a temperature at 80°C and a tension rate of 3.3 mm/sec (80°CEB), a loss tangent tang δ of the rubber composition measured under a condition of a temperature at 70°C, a frequency of 10 Hz, an initial strain of 10%, and a dynamic strain of ± 2.5% (70°C tan δ), and G (mm) satisfy inequalities (1) and (2) described below.

$$80°CEB/70°C \tan δ ≥ 2600 \quad \cdots \quad (1)$$

$$80°CEB/G ≥ 40 \quad \cdots \quad (2)$$

The tire obtained is remarkably improved in total performance of fuel efficiency and crack resistance when 80°CEB and 70°C tan δ of the rubber composition forming the inner liner and the distance from the crown part of the tread to the tire inner cavity surface satisfy the above-described condition. The reason for that is considered as follows, although the following consideration is not intended to be bound by any theory.

A temperature of the tire becomes higher than a normal temperature during a rolling motion of the tire. The tire of the present invention is made such that an elongation at break at a high temperature is made to become equal to or higher than a certain level relative to a thermogenic property of the inner liner (70°C tan δ) so as to satisfy the above-described inequality (1). This allows for the elongation at break at a high temperature to be sufficiently secured while suppressing deterioration of breaking strength due to an increase in temperature resulting from heat generation on the inner liner layer itself during the rolling motion, so that it can be considered that occurrence of crack can be suppressed.

Moreover, the elongation at break at a high temperature is made to become equal to or higher than a certain level relative to the distance G from the outermost surface of the crown part of the tread part to the tire inner cavity surface so as to satisfy the above-described inequality (2). It can be considered that, by such a configuration, when the inner liner layer deforms as it follows deformation of the tread part, the larger the G becomes, the larger the strain applied to the surface of the inner liner can become, and conversely, the smaller the G becomes, the smaller the strain applied to the surface of the inner liner layer can become. Accordingly, by setting the distance from the surface of the tread to the surface of the inner liner layer to 9.0 mm or less to be small and setting the elongation at break at a high temperature to be sufficiently high relative to the distance, it becomes possible to achieve a sufficient elongation while suppressing the strain applied to the inner liner layer, and it can be considered that occurrence of crack can be more effectively suppressed.

As described above, since it becomes possible to sufficiently secure the elongation at break relative to the strain applied to the inner liner layer while suppressing deterioration of the elongation at break due to an increase in temperature of the inner liner layer, it can be considered that crack resistance can be remarkably improved.

From the viewpoint of a balance of crack resistance and fuel efficiency, the rubber composition of the present disclosure preferably comprises 10 to 45 parts by mass of a filler based on 100 parts by mass of the polymer component.

From the viewpoints of air permeation resistance and heat resistance, the polymer component of the present disclosure preferably includes 75% by mass or more of a butyl-based rubber.

From the viewpoints of crack resistance and air permeation resistance, the rubber composition of the present disclosure preferably comprises an aromatic-based petroleum resin.

From the viewpoint of air permeation resistance, a total content of an isoprene-based rubber and a butadiene rubber in the polymer component of the present disclosure is preferably 10% by mass or less.

When a thickness of the inner liner on a tire equatorial plane is defined as L (mm), L/G is preferably less than 0.10 in the tire of the present disclosure.

By setting L/G within the above-described range, it can be considered that, when the inner liner layer follows the tread and deforms, concentration of strain inside the inner liner layer can be easily prevented by decreasing the thickness of the inner liner part.

<Definition>

A "standardized rim" is a rim defined for each tire in a standard system including a standard, on which the tire is based, by the standard, for example, a "standard rim" in JATMA, "Design Rim" in TRA, or "Measuring Rim" in ETRTO.

The "crown part of a tread" refers to an outermost end of the tread intersecting with the tire equatorial plane in a case where no circumferential groove is provided on the tire equatorial plane or refers to a part in which a line connecting outermost ends of the tread in land parts of both ends of a circumferential groove intersects with the tire equatorial plane in a case where the circumferential groove is provided on the tire equatorial plane.

The "distance G from a crown part of the tread to a tire inner cavity surface" refers to a direct distance from the crown part on the tire equatorial plane to the tire inner cavity surface, in a cross-section obtained by cutting the tire along a plane including a rotation axis of the tire.

The "thickness L of the inner liner on the tire equatorial plane" refers to a direct distance from the tire inner cavity surface on the tire equatorial plane to an innermost part of a carcass in a tire radial direction, in the cross-section obtained by cutting the tire along the plane including the rotation axis of the tire.

A "content of oil" also comprises an amount of oil contained in an oil-extended rubber.

<Measuring method>

The "distance G from a crown part of the tread to a tire inner cavity surface" and the "thickness L of the inner liner on the tire equatorial plane" are values measured in a state where a width of a bead part is made to match a width of the standardized rim by cutting the tire along the plane including the rotation axis of the tire.

The "80°CEB" is an elongation at break (elongation at cutting) measured under a condition of a tension rate of 3.3 mm/sec, under an atmosphere of 80°C, in accordance with JIS K 6251 :2017. A sample for EB measurement is a vulcanized rubber specimen of dumbbell-shaped No. 7.

The "70°C tan $\delta$" is a loss tangent measured under a condition of a temperature at 70°C, a frequency of 10 Hz, an initial strain of 10%, a dynamic strain of $\pm$ 2.5%, and an extension mode. A sample for loss tangent measurement is a vulcanized rubber composition having a length of 20 mm, a width of 4 mm, and a thickness of 1 mm.

A glass transition temperature (Tg) of a SBR is measured by measuring a temperature in accordance with JIS K 7121 using a differential calorimeter (Q200) manufactured by TA Instruments Japan Inc. while increasing the temperature at a temperature rising rate of 10°C/min.

A "$N_2SA$ of carbon black" is measured in accordance with JIS K

A procedure for producing a tire that is one embodiment of the present invention is described below in detail. Besides, in the present specification, a numerical range identified with "to" means to include the numerical values of both ends.

[Tire]

Although FIG. 1 is an enlarged cross-sectional view illustrating a part of a tread of a tire according to the present disclosure, the present disclosure is not limited to such an aspect. The tire of the present disclosure has a tread part 1 coming into contact with the ground during running and has a belt layer 8 inside in a tire radial direction. A carcass 9 and an inner liner 7 are layered on the lower part of the belt layer 8. Moreover, a band may be present between the tread part 1 and the belt layer 8. In FIG. 1, two belt layers 8 are layered, and a band 11 having a jointless structure is disposed on an inner side of a base rubber layer 4.

A 80°CEB (%) of the rubber composition forming the inner liner is preferably 360% or more, more preferably 400% or more, further preferably 440% or more, particularly preferably 480% or more, from the viewpoint of fuel efficiency. Besides, an upper limit of 80°CEB (%) of the rubber composition forming the inner liner is not particularly limited.

A 70°C tan $\delta$ of the rubber composition forming the inner liner is preferably 0.20 or less, more preferably 0.19 or less, further preferably 0.17 or less, particularly preferably 0.15 or less, from the viewpoint of fuel efficiency. Moreover, 70°C tan $\delta$ of the rubber composition forming the inner liner is preferably 0.05 or more, more preferably 0.08 or more, further preferably 0.10 or more, from the viewpoint of effects of the present invention.

Besides, 80°CEB (%) and 70°C tan $\delta$ of the rubber composition can be appropriately adjusted depending on types and compounding amounts of a polymer component, a filler, oil, a resin component, and the like which are described below.

The distance G (mm) from the crown part of the tread to the tire inner cavity surface is 9.0 mm or less, preferably 8.8 mm or less, more preferably 8.5 mm or less, further preferably 8.3 mm or less, particularly preferably 8.0 mm or less, from the viewpoint of the effects of the present invention. Moreover, the G (mm) is preferably 3.0 mm or more, more preferably 4.0 mm or more, further preferably 5.0 mm or more, particularly preferably 6.0 mm or more, from the viewpoint of the effects of the present invention.

The thickness L (mm) of the inner liner on the tire equatorial plane is preferably 0.1 mm or more, more preferably 0.2 mm or more, further preferably 0.3 mm or more, from the viewpoint of the effects of the present invention. Moreover, the L (mm) is preferably 1.0 mm or less, more preferably 0.9 mm or less, further preferably 0.8 mm or less, particularly preferably 0.7 mm or less, from the viewpoint of the effects of the present invention.

80°CEB/70°C tan $\delta$ is 2600 or more, preferably 2900 or more, more preferably 3200 or more, further preferably 3500 or more. By setting 80°CEB/70°C tan $\delta$ in the above-described ranges, it becomes possible to sufficiently secure elongation at break at a high temperature while suppressing deterioration of breaking strength due to an increase in temperature resulting from heat generation by the inner liner layer itself during the rolling motion, and thus it can be considered that occurrence of crack can be suppressed. Moreover, 80°CEB/70°C tan $\delta$ is preferably 5000 or less, more preferably 4800 or less, further preferably 4500 or less, from the viewpoint of the effects of the present invention.

80°CEB/G is 40 or more, preferably 45 or more, more preferably 50 or more, further preferably 55 or more, particularly preferably 60 or more. By setting 80°CEB/G in the above-described ranges, it becomes possible to achieve sufficient elongation while suppressing the strain applied to the inner liner layer, and thus it can be considered that occurrence of crack can be more effectively suppressed. Moreover, 80°CEB/G is preferably 120 or less, more preferably 110 or less, further preferably 100 or less, particularly preferably 95 or less, from the viewpoint of the effects of the present invention.

L/G is preferably less than 0.30, more preferably less than 0.25, further preferably less than 0.20, further preferably less than 0.15, further preferably less than 0.14, further preferably less than 0.12, particularly preferably less than 0.10. By setting L/G within the above-described ranges, it can be considered that, when the inner liner layer follows the tread and deforms, concentration of strain inside the inner liner layer can be easily prevented by decreasing the thickness of the inner liner part. Moreover, L/G is preferably 0.04 or more, more preferably 0.05 or more, further preferably 0.06 or more, particularly preferably 0.07 or more, from the viewpoint of the effects of the present invention.

[Rubber composition]

The total performance of fuel efficiency and crack resistance of the tire of the present invention can be more effectively improved by cooperation of 80°CEB and 70°C tan δ of the above-described rubber composition forming the inner liner with the distance from the crown part of the tread to tire inner cavity surface.

<Polymer component>

The polymer component of the present disclosure includes a rubber component and a thermoplastic elastomer that are described below, is a component mainly forming a matrix of the composition, and is detected as a polymer component in a composition analysis such as a thermogravimetric apparatus (TGA).

(Rubber component)

A "rubber component" in the present disclosure refers to a component forming a chemical network with a vulcanizing agent such as sulfur and exerting rubber elasticity.

The rubber composition of the present disclosure forming the inner liner (which is hereinafter referred to as a "rubber composition of the present disclosure", unless otherwise noted) preferably comprises a butyl-based rubber as a rubber component. Moreover, the rubber composition of the present disclosure may comprise, in addition to the butyl-based rubber, a diene-based rubber such as a styrene-butadiene rubber.

Examples of the butyl-based rubber include, for example, a non-halogenated butyl rubber (regular butyl rubber, IIR), a halogenated butyl rubber (X-IIR) such as a brominated butyl rubber (Br-IIR) and a chlorinated butyl rubber (Cl-IIR), a copolymer of isobutylene and p-alkyl styrene, and the like, and the butyl-based rubber is preferably one or more selected from the group consisting of a halogenated butyl rubber (X-IIR) and a copolymer of isobutylene and p-alkyl styrene, more preferably a copolymer of isobutylene and p-alkyl styrene. Besides, these butyl-based rubbers may be used alone, or two or more thereof may be used in combination.

Examples of p-alkyl styrene constituting the copolymer of isobutylene and p-alkyl styrene include, for example, p-methylstyrene and the like. The copolymer of isobutylene and p-alkyl styrene may be halogenated. A site to be halogenated may be an isobutylene unit or a p-alkyl styrene unit, preferably a p-alkyl styrene unit, more preferably an alkyl group of the p-alkyl styrene unit.

A content of the butyl-based rubber in the polymer component is preferably 50 % by mass or more, more preferably 60 % by mass or more, further preferably 65% by mass or more, further preferably 70% by mass or more, particularly preferably 75% by mass or more, from the viewpoints of air permeation resistance and heat resistance. Moreover, an upper limit value of the content of the butyl-based rubber in the polymer component is not particularly limited and can be set to, for example, 99% by mass or less, 97% by mass or less, 95% by mass or less, 93% by mass or less, or 91% by mass or less.

Examples of the SBR include, but not particularly limited to, an emulsion polymerized SBR (E-SBR), a solution-polymerized SBR (S-SBR), and the like, and modified ones obtained by modifying these SBRs with a modifying agent (modified SBRs), hydrogenated ones of these SBRs (hydrogenated SBRs), and the like can also be used. These SBRs may be used alone, or two or more thereof may be used in combination.

An oil-extended SBR or a non-oil extended SBR can also be used as the SBR. In a case of using the oil-extended SBR, an oil-extended amount of the SBR, that is, a content of an extending oil when compounded in the SBR based on 100 parts by mass of a rubber solid content of the SBR is preferably 10 parts by mass or more and 50 parts by mass or less.

The glass transition temperature (Tg) of the SBR is preferably -75°C or more, more preferably -70°C or more, further preferably -65°C or more, from the viewpoint of the effects of the present invention. Moreover, the Tg is preferably -40°C or less, more preferably -45°C or less, further preferably -50°C or less, from the viewpoint of the effects of the present invention.

A content of the SBR when compounded in the polymer component can be, but not particularly limited to, for example, 1% by mass or more, 3% by mass or more, 5% by mass or more, or 7% by mass or more. On the other hand, the content of the SBR in the polymer component is preferably 30% by mass or less, more preferably 25% by mass or less, or further preferably 20% by mass or less, particularly preferably 15% by mass, from the viewpoint of the effects of the present invention.

The rubber component can also include a rubber component other than the above-described rubber components to an extent that the effects of the present invention are not impaired. Examples of such a rubber component include, for example, diene-based rubbers other than the SBR such as an isoprene-based rubber, a butadiene rubber (BR), a styrene-isoprene rubber (SIR), a styrene-isoprene-butadiene copolymer rubber (SIBR), a chloroprene rubber (CR), and an acrylonitrile-butadiene rubber (NBR); non-diene-based rubbers such as a hydrogenated nitrile rubber (HNBR), a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber; and the like.

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber; and the like. These isoprene-based rubbers may be used alone, or two or more thereof may be used in combination.

A total content of the isoprene-based rubber and the BR in the polymer component is preferably 20% by mass or less, more preferably 15% by mass or less, further preferably 10% by mass or less, further preferably 5% by mass or less, particularly preferably less than 1% by mass, from the viewpoint of the effects of the present invention. The polymer component may be a polymer component that does not include an isoprene-based rubber or a BR.

The polymer component of the present disclosure preferably comprises a rubber component. A content of the rubber component in the polymer component is preferably 10% by mass or more, more preferably 20% by mass or more, further preferably 30% by mass or more, particularly preferably 40% by mass or more, from the viewpoint of the effects of the present invention. On the other hand, an upper limit value of the content of the rubber component in the polymer component is not limited to these values as long as the effects of the present invention can be exhibited and can be, for example, 100% by mass, 95% by mass or less, 90% by mass or less, 80% by mass or less, 70% by mass or less, 60% by mass or less, or 55% by mass or less.

(Thermoplastic elastomer)

The polymer component of the present disclosure may include a thermoplastic elastomer together with the rubber component. In the present disclosure, the "thermoplastic elastomer" is a high-molecular compound having elasticity and refers to a thermoplastic resin material consisting of a copolymer having a polymer constituting a crystalline hard segment having a high melting point and a polymer constituting a non-crystalline soft segment having a low glass transition temperature, the thermoplastic resin material having a pseudo network that is formed by van der Waals force in the rubber composition. In the thermoplastic elastomer, its crystalline hard segment having a high melting point behaves as a pseudo crosslinking point and exhibits elasticity. Since the pseudo crosslinking point can be reproduced by heating the thermoplastic elastomer to melt the hard segment once, and then cooling the thermoplastic elastomer, the thermoplastic elastomer is reusable. On the other hand, a rubber has double bonds or the like in a molecular chain and generates a three-dimensional network structure by being added with sulfur or the like to be crosslinked (vulcanized) and exhibits elasticity. Accordingly, once the rubber is crosslinked (vulcanized), it loses flowability due to this three-dimensional network structure, and therefore the rubber is difficult to be reused even though it is heated.

Examples of the thermoplastic elastomer that can be used in the present disclosure include, but not particularly limited to, for example, a styrene-based thermoplastic elastomer, an urethane-based thermoplastic elastomer, an olefin-based thermoplastic elastomer, a polyester-based thermoplastic elastomer, a polyamide-based thermoplastic elastomer, and the like. Among them, a styrene-based thermoplastic elastomer or an urethane-based thermoplastic elastomer is preferable, and a styrene-based thermoplastic elastomer is more preferable. The thermoplastic elastomers can be used alone, or two or more thereof can be used in combination.

The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one or both ends; as well as an elastomer block in a region other than these ends. When the molecular structure has a styrene block at least at one end, there is a tendency that a better grip performance can be obtained. Also, the styrene-based thermoplastic elastomer is more preferably a structure having no styrene block at a main chain part other than the ends. With such a structure, hardness of the thermoplastic elastomer in a normal temperature range does not become too high, thereby obtaining a better grip performance, and there is a tendency that better fracture characteristics and abrasion resistance can be obtained.

Examples of the elastomer block include, for example, vinyl-polydiene such as styrene-butadiene (SB), polyisoprene (IP), polybutadiene, polyethylene, polychloroprene, poly 2,3-dimethyl butadiene, and the like. Also, an elastomer block obtained by hydrogenating the above-described elastomer block can be used.

Examples of the styrene-based thermoplastic elastomer include, for example, a styrene-isobutylene block copolymer (SIB), a styrene-butadienestyrene block copolymer (SBS), a styrene-isoprene-styrene block copolymer (SIS), a styrene-isobutylene-styrene block copolymer (SIBS), a styrene-ethylene butylene block copolymer (SEB), a styrene-ethylene propylene block copolymer (SEP), a styrene-ethylene butylene-styrene block copolymer (SEBS), a styrene-ethylene butylene-ethylene block copolymer (SEBC), a hydrogenated styrene butadiene copolymer (HSBR), a styrene-ethylene propylene-styrene block copolymer (SEPS), a styrene-ethylene ethylene propylene-styrene block copolymer (SEEPS), a styrene-butadiene butylene-styrene block copolymer (SBBS), a styrene-vinyl isoprene-styrene block copolymer (vinyl SIS), a styrene-vinyl ethylene propylene-styrene block copolymer (vinyl SEPS), and the like.

A styrene-unit content of the styrene-based thermoplastic elastomer (a styrene content) is preferably 5% by mass or more, more preferably 10% by mass or more, further preferably 15% by mass or more, from the viewpoint of grip performance. Moreover, it is preferably 30% by mass or less, more preferably 25% by mass or less, further preferably 20% by mass or less, from the viewpoint of suppression of heat generation.

The urethane-based thermoplastic elastomer is not particularly limited, and, for example, those prepared with polyol and diisocyanate can be appropriately used as the urethane-based thermoplastic elastomers. Examples of polyol include a polyester-based polyol, a polyester-ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

Examples of the olefin-based thermoplastic elastomer include, for example, ethylene alpha-olefin copolymers such as an ethylene-propylene copolymer (EPR), an ethylene-butene copolymer (EBR), an ethylene-hexene copolymer (EHR), and an ethylene-octene copolymer (EOR); ethylene alpha-olefin diene terpolymers such as an ethylene-propylene-ethylidene-norbornane copolymer, an ethylene-propylene-butadiene copolymer, and an ethylene-propylene-isoprene copolymer; and the like.

From the viewpoint of suppressing deterioration, the thermoplastic elastomer includes preferably a hydrogenated thermoplastic elastomer, more preferably a hydrogenated styrene-based thermoplastic elastomer, or preferably consists of a hydrogenated thermoplastic elastomer.

As the thermoplastic elastomer, those modified with a modifying agent and into which a modified group is introduced can also be used, if desired. As such a modified group, any of those commonly used in this field can be appropriately used, examples of which include, for example, alkoxysilyl groups (for example, a trimethoxysilyl group, a triethoxysilyl group) and the like. For example, by synthesizing a styrene-based thermoplastic elastomer having a styrene end at least at one end and then treating the synthesized styrene-based thermoplastic elastomer using chlorotriethoxysilane as a modifying agent, it becomes possible to obtain a modified styrene-based thermoplastic elastomer in which a triethoxysilyl group is introduced into its activated end.

As the thermoplastic elastomer, a commercially available thermoplastic elastomer or a thermoplastic elastomer obtained by synthesis may be used. Examples of the commercially available thermoplastic elastomer include, for example, those manufactured and sold by JSR Corporation, Asahi Kasei Corporation, Kuraray Co., Ltd., and Nippon Miractran Co,Ltd.

A content of the thermoplastic elastomer when compounded in the polymer component is preferably 90% by mass or less, more preferably 80% by mass or less, further preferably 70% by mass or less, particularly preferably 60% by mass or less, from the viewpoint of crack resistance. On the other hand, a lower limit value of the content of the thermoplastic elastomer can vary depending on other compoundings and is not particularly limited as long as the effects of the present invention can be exhibited, but can be, for example, 5% by mass or more, 10% by mass or more, 20% by mass or more, 30% by mass or more, 40% by mass or more, or 45% by mass or more limit value i.

<Filler>

The rubber composition according to the present disclosure preferably comprises carbon black as a filler and may comprise a filler other than carbon black. Moreover, the filler may be a filler consisting of carbon black.

(Carbon black)

Carbon black is not particularly limited, and those common in the tire industry can be used, such as, for example, GPF, FEF, HAF, ISAF, and SAF. Carbon black may be used alone, or two or more thereof may be used in combination.

A nitrogen adsorption specific surface area ($N_2SA$) of carbon black is preferably 10 m$^2$/g or more, more preferably

20 m$^2$/g or more, for the reason that a sufficient reinforcing property can be obtained. Moreover, the N$_2$SA of carbon black is preferably 80 m$^2$/g or less, more preferably 60 m$^2$/g or less, further preferably 40 m$^2$/g or less, from the viewpoints of air permeation resistance and durability. Besides, the N$_2$SA of carbon black is measured by the above-described measuring method.

A content of carbon black when compounded based on 100 parts by mass of the polymer component is preferably 10 parts by mass or more, more preferably 15 parts by mass or more, further preferably 20 parts by mass or more, further preferably 25 parts by mass or more, particularly preferably 30 parts by mass or more, from the viewpoints of embrittlement performance and reinforcing property. Moreover, the content of carbon black is preferably 65 parts by mass or less, more preferably 60 parts by mass or less, further preferably 55 parts by mass or less, further preferably 50 parts by mass or less, particularly preferably 45 parts by mass or less, from the viewpoint of durability after hygrothermal aging.

(Other fillers)

As fillers other than carbon black, those conventionally and commonly used in the tire industry can be compounded, such as, for example, silica, aluminum hydroxide, calcium carbonate, alumina, clay, and talc. Among them, one or more selected from the group consisting of calcium carbonate, clay, and talc are preferable, and calcium carbonate is more preferable.

A content of a filler other than carbon black based on 100 parts by mass of the polymer component is, but not particularly limited to, preferably 1 part by mass or more, more preferably 3 parts by mass or more, further preferably 5 parts by mass or more, from the viewpoint of reinforcing property. Moreover, the content of the filler other than carbon black is preferably 30 parts by mass or less, more preferably 25 parts by mass or less, further preferably 20 parts by mass or less.

A total content of fillers based on 100 parts by mass of the polymer component is preferably 10 parts by mass or more, more preferably 15 parts by mass or more, further preferably 20 parts by mass or more, further preferably 25 parts by mass or more, particularly preferably 30 parts by mass or more, from the viewpoint of the effects of the present invention. Moreover, the total content of fillers based on 100 parts by mass of the polymer component is preferably 65 parts by mass or less, more preferably 60 parts by mass or less, further preferably 55 parts by mass or less, further preferably 50 parts by mass or less, particularly preferably 45 parts by mass or less, from the viewpoint of the effects of the present invention.

A content of carbon black in 100% by mass of a filler is preferably 50% by mass or more, more preferably 60% by mass or more, further preferably 70% by mass or more, particularly preferably 75% by mass or more, from the viewpoint of the effects of the present invention. Besides, an upper limit value of the content of carbon black in 100% by mass of the filler is not particularly limited.

<Other compounding agents>

The rubber composition according to the present disclosure can appropriately comprise compounding agents conventionally and commonly used in the tire industry, such as, for example, a softening agent, wax, processing aid, stearic acid, zinc oxide, an antioxidant, a vulcanizing agent, and a vulcanization accelerator, in addition to the above-described components.

(Softening agent)

The rubber composition according to the present disclosure preferably comprises a softening agent. Examples of the softening agent include, for example, a resin component, oil, a liquid rubber, and the like.

Examples of the resin component include, but not particularly limited to, hydrocarbon resins such as a petroleum resin, a terpene-based resin, a rosin-based resin, and a phenol-based resin, which are commonly used in the tire industry, and the resin component is preferably an aromatic-based petroleum resin . These resin components may be used alone, or two or more thereof may be used in combination.

In the present specification, the "aromatic-based petroleum resin" means a resin obtained by polymerizing C9 fractions and may be those undergoing hydrogeneration or modification. Examples of the C9 fractions include, for example, a petroleum fraction comparable to 8 to 10 carbon atoms, such as vinyltoluene, alkylstyrene, indene, and methylindene. As specific examples of the aromatic-based petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene and a copolymer of α-methylstyrene and styrene are preferable because they are economical, easy to process, and excellent in thermogenetic property, and a copolymer of α-methylstyrene and styrene is more preferable. As the aromatic vinyl-based resin, for example, those commercially available from Kraton Corporation, Eastman Chemical Company, and the like can be used.

A content of the resin component when compounded based on 100 parts by mass of the polymer component is preferably 0.1 parts by mass or more, more preferably 0.5 parts by mass or more, further preferably 1.0 part by mass or more, particularly preferably 1.5 parts by mass. Moreover, the content of the resin component is preferably 20 parts by mass or less, more preferably 15 parts by mass or less, further preferably 10 parts by mass or less, particularly preferably 7.0 parts by mass or less.

Examples of oil include, for example, process oils, vegetable oils and fats, animal oils and fats, and the like. Examples of the process oils include paraffinic process oils, naphthenic process oils, aromatic process oils, and the like. Moreover, a process oil having a low polycyclic-aromatic-compound (PCA) content can also be used for environmental measures. Examples of the process oil having a low PCA content include mild extraction solvates (MES); treated distillate aromatic extracts (TDAE); heavy naphthenic oil; and the like.

A content of oil when compounded based on 100 parts by mass of the polymer component is preferably 1.0 part by mass or more, more preferably 1.5 parts by mass or more, further preferably 2.0 parts by mass or more, from the viewpoint of processability. Moreover, it is preferably 50 parts by mass or less, more preferably 30 parts by mass or less, further preferably 20 parts by mass or less, particularly preferably 10 parts by mass or less, from the viewpoint of abrasion resistance.

The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the polymer component is preferably 1.0 part by mass or more, more preferably 2.0 parts by mass or more. Moreover, the content of the liquid rubber is preferably 50 parts by mass or less, more preferably 30 parts by mass or less, further preferably 10 parts by mass or less.

A content of the softening agent when compounded based on 100 parts by mass of the polymer component (a total amount of all of a plurality of softening agents when used in combination) is preferably 1.0 part by mass or more, more preferably 3.0 parts by mass or more, further preferably 5.0 parts by mass or more, particularly preferably 7.0 parts by mass or more. Moreover, the content of the softening agent is preferably 50 parts by mass or less, more preferably 30 parts by mass or less, further preferably 20 parts by mass or less.

A content of wax when compounded based on 100 parts by mass of the polymer component is preferably 0.5 parts by mass or more, more preferably 1.0 part by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid ester, a fatty acid amide, an amide ester, a mixture of a fatty acid metal salt and a fatty acid ester, a mixture of a fatty acid metal salt and a fatty acid amide, a mixture of a fatty acid metal salt and an amide ester, a silica surfactant, and the like. As processing aid, for example, those commercially available from Schill & Seilacher, Performance Additives, etc. can be used. These processing aid may be used alone, or two or more thereof may be used in combination.

A content of processing aid when compounded based on 100 parts by mass of the polymer component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, further preferably 5.0 parts by mass, from the viewpoints of abrasion resistance and breaking strength.

The antioxidant is not particularly limited, and those used in the rubber field can be used, examples of which include, for example, quinoline-based, quinone-based, phenol-based, and phenylenediamine-based antioxidants.

A content of the antioxidant when compounded based on 100 parts by mass of the polymer component is preferably 0.5 parts by mass or more, more preferably 0.8 part by mass or more. Moreover, the content of the antioxidant is preferably 2.0 parts by mass or less, more preferably 1.5 parts by mass or less, further preferably 1.2 parts by mass or less, from the viewpoints of dispersibility of the filler or the like, elongation at break, and kneading efficiency.

A content of stearic acid when compounded based on 100 parts by mass of the polymer component is preferably 0.5 parts by mass or more, more preferably 1.0 part by mass or more, from the viewpoint of vulcanization rate. Moreover, it is preferably 10 parts by mass or less, more preferably 5.0 parts by mass or less, from the viewpoint of processability.

A content of zinc oxide when compounded based on 100 parts by mass of the polymer component is preferably 0.5 parts by mass or more, more preferably 1.0 part by mass or more, from the viewpoint of vulcanization rate. Moreover, it is preferably 10 parts by mass or less, more preferably 5 parts by mass or less, from the viewpoint of abrasion resistance.

Sulfur is appropriately used as the vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the polymer component is preferably 0.1 parts by mass or more, more preferably 0.3 part by mass or more, further preferably 0.5 part by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone, or two or more thereof may be used in combination. Among them, one or more vulcanization accelerators selected from the group consisting of a sulfenamide-based vulcanization accelerator, a guanidine-based vulcanization accelerator, and a thiazole-based vulcanization accelerator are preferable, and a thiazole-based vulcanization accelerator is more preferable, from the viewpoint that a desired effect can be more appropriately obtained.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, di-2-benzothiazolyl disulfide is preferable.

A content of the vulcanization accelerator when compounded based on 100 parts by mass of the polymer component is preferably 0.5 parts by mass or more, more preferably 1.0 part by mass or more. Moreover, the content of the vulcanization accelerator based on 100 parts by mass of the polymer component is preferably 8.0 parts by mass or less, more preferably 6.0 parts by mass or less, further preferably 4.0 parts by mass or less. When the content of the vulcanization accelerator is within the above-described ranges, there is a tendency that breaking strength and elongation can be secured.

The rubber composition according to the present disclosure can be produced by a known method. For example, it can be produced by kneading each of the above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step also can be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at a temperature of 150°C to 200°C for 10 to 30 minutes.

The tire of the present disclosure comprising the inner liner formed of the rubber composition can be produced by a usual method. That is, the tire can be produced by extruding an unvulcanized rubber composition, in which the above-described components are compounded for a polymer component as appropriate, into a shape of the inner liner, attaching it together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at a temperature of 150°C to 200°C for 10 to 30 minutes.

<Intended use>

The tire of the present disclosure can be appropriately used as a tire for a passenger car, a tire for a truck/bus, a tire for a two-wheeled vehicle, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire of the present disclosure can be used as an all-season tire, a summer tire, or a winter tire such as a studless tire.

EXAMPLES

Hereinafter, the present invention will be described based on Examples, though the present invention is not limited to only these Examples.
Various chemicals used in Examples and Comparative examples are collectively shown below.

Butyl-based rubber 1: Exxon 2255 (brominated butyl rubber) manufactured by Exxon Mobil Corporation
Butyl-based rubber 2: Exxpro 3563 (halide of copolymer of isobutylene and p-methylstyrene) manufactured by Exxon Mobil Corporation
SBR: SL553 manufactured by JSR Corporation (unmodified S-SBR, Tg: -61°C, a non-oil-extended product)
Thermoplastic elastomer: SIBSTAR 102T manufactured by KANEKA CORPORATION (SISB, styrene content: 15% by mass)
Carbon black: Seast V manufactured by Tokai Carbon Co., Ltd., (GPF, N660, $N_2SA$: 27 m$^2$/g)
Calcium carbonate: FP-300 manufactured by CALFINE CO., LTD.
Oil: Diana process AH-24 manufactured by Idemitsu Kosan Co.,Ltd.
Resin component: Sylvatraxx 4401 manufactured by Kraton Corporation (copolymer of $\alpha$-methylstyrene and styrene)
Processing aid: Struktol WB 16 manufactured by Schill & Seilacher (mixture of fatty acid metal salt and fatty acid ester)
Antioxidant: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: HK-200-5 manufactured by Hosoi Chemical Industry Co., Ltd. (5% by mass of oil-containing powdered sulfur)
Vulcanization accelerator: Nocceler DM manufactured by Ouchi Shinko Chemical Industry Co., Ltd. (di-2-benzothiazolyldisulfide)

(Examples and Comparative examples)

According to the compounding formulations shown in Table 1, using a 2.0 L closed Banbury mixer, chemicals other than sulfur and a vulcanization accelerator were kneaded at a discharge temperature of 150°C for 4 minutes to obtain a kneaded product. Additionally, the obtained kneaded product was kneaded again at a discharge temperature of 130°C for 3 minutes with the Banbury mixer (re-mil). Next, using a twin-screw open roll, sulfur and the vulcanization accelerator were added to the obtained kneaded product, and the mixture was kneaded for 3 minutes until the temperature reached 95°C, to obtain an unvulcanized rubber composition. The obtained unvulcanized rubber composition was rolled into a raw rubber sheet having a thickness of 2 mm with a roll, and the raw rubber sheet was press-vulcanized at 170°C for 12 minutes, thereby producing a vulcanized rubber composition.
Moreover, the obtained unvulcanized rubber composition was extruded into a shape of an inner liner using an extruder equipped with a mouthpiece having a predetermined shape and was attached together with other tire members to produce an unvulcanized tire, and the unvulcanized tire was press-vulcanized at 170°C for 12 minutes, thereby producing each test tire.

<Tensile test>

A specimen of dumbbell-shaped No. 7 was prepared from each vulcanized rubber composition. A tensile test was performed under a condition of a tension rate of 3.3 mm/sec, under an atmosphere at 80°C, in accordance with JIS K 6251 :2017, to measure an elongation at break (EB)

(%).

<Viscoelasticity test>

A loss tangent tan $\delta$ of a rubber specimen prepared from each vulcanized rubber composition (20 mm in length $\times$ 4 mm in width $\times$ 1 mm in thickness) was measured using EPLEXOR Series manufactured by gabo Systemtechnik GmbH under a condition of a temperature at 70°C, a frequency of 10 Hz, an initial strain 10%, a dynamic strain $\pm$ 2.5%, and an extension mode. Besides, a thickness direction of the sample was set to match the tire radial direction.

<Crack resistance>

Each test tire (size: 205/55R16, rim 16 $\times$ 6.5JJ, internal pressure: 230 kPa) was run 20,000 Km under a condition of a load of 690 kg and a speed of 80 km/h using a drum testing machine, and then the rim was detached, and an extent of occurrence of crack was evaluated by visually observing the inner appearance of the tire. The evaluation was performed on a scale of 1 to 10 of integer values, and a total score of scores given by ten professional panelists was calculated under evaluation criteria in which higher score means better crack resistance. A total score of a control tire (Comparative example 7) was converted into a standard value (100), and an evaluation result of each test tire was indicated as an index so as to be proportional to the total score.

Table 1

| | Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| Butyl-based rubber 1 | - | - | - | - | - | - | - | - | 100 |
| Butyl-based rubber 2 | 100 | 100 | 100 | 100 | 100 | 50 | 90 | 100 | - |
| SBR | - | - | - | - | - | - | 10 | - | - |
| Thermoplastic elastomer | - | - | - | - | - | 50 | - | - | - |
| Carbon black | 50 | 46 | 40 | 40 | 40 | 30 | 40 | 35 | 45 |
| Calcium carbonate | - | - | - | - | - | - | - | 10 | - |
| Oil | 5.0 | 5.0 | 5.0 | 5.0 | 5.0 | 5.0 | 5.0 | 5.0 | 5.0 |
| Resin component | 5.0 | 5.0 | 5.0 | 5.0 | 5.0 | 5.0 | 5.0 | 5.0 | 5.0 |
| Processing aid | 2.0 | 2.0 | 2.0 | 2.0 | 2.0 | 2.0 | 2.0 | 2.0 | 2.0 |
| Antioxidant | 1.5 | 1.5 | 1.5 | 1.5 | 1.5 | 1.5 | 1.5 | 1.5 | 1.5 |
| Stearic acid | 1.0 | 1.0 | 1.0 | 1.0 | 1.0 | 1.0 | 1.0 | 1.0 | 1.0 |
| Zinc oxide | 1.0 | 1.0 | 1.0 | 1.0 | 1.0 | 1.0 | 1.0 | 1.0 | 1.0 |
| Sulfur | 0.6 | 0.6 | 0.6 | 0.6 | 0.6 | 0.6 | 0.6 | 0.6 | 0.6 |
| Vulcanization accelerator | 1.0 | 1.0 | 1.0 | 1.0 | 1.0 | 1.0 | 1.0 | 1.0 | 1.0 |
| 80°CEB(%) | 600 | 600 | 550 | 550 | 550 | 500 | 470 | 620 | 700 |
| 70°C tan $\delta$ | 0.18 | 0.16 | 0.14 | 0.14 | 0.14 | 0.12 | 0.12 | 0.14 | 0.20 |
| L (mm) | 1.0 | 1.0 | 1.0 | 0.8 | 0.7 | 0.5 | 0.7 | 0.7 | 0.7 |
| G (mm) | 8.0 | 8.0 | 8.0 | 8.0 | 8.0 | 7.0 | 8.0 | 8.0 | 8.0 |
| 80°CEB / 70°C tan $\delta$ | 3333 | 3750 | 3929 | 3929 | 3929 | 4167 | 3917 | 4429 | 3500 |
| 80°CEB / G | 75 | 75 | 69 | 69 | 69 | 71 | 59 | 78 | 88 |
| L / GL/G | 0.13 | 0.13 | 0.13 | 0.10 | 0.09 | 0.07 | 0.09 | 0.09 | 0.09 |
| Crack resistance index | 104 | 104 | 104 | 104 | 109 | 113 | 107 | 118 | 103 |

- continued -

|  | Comparative example | | | | | | | |
|---|---|---|---|---|---|---|---|---|
|  | 1 | 2 | 3 | 4 | 5 | 6 | 7 | 8 |
| Compounding amount (part by mass) | | | | | | | | |
| Butyl-based rubber 1 | - | - | - | - | 100 | 100 | 100 | 50 |
| Butyl-based rubber 2 | 100 | 100 | 100 | 100 | - | - | - | - |
| SBR | - | - | - | - | - | - | - | 50 |
| Thermoplastic elastomer | | | | | | | | |
| Carbon black | 80 | 60 | 80 | 80 | 45 | 45 | 45 | 40 |
| Calcium carbonate | | | | | | | | |
| Oil | - | 5.0 | - | - | 5.0 | 5.0 | 5.0 | 6.0 |
| Resin component | 5.0 | 5.0 | 5.0 | 5.0 | 5.0 | 5.0 | 5.0 | - |
| Processing aid | 2.0 | 2.0 | 2.0 | 2.0 | 2.0 | 2.0 | 2.0 | 2.0 |
| Antioxidant | 1.5 | 1.5 | 1.5 | 1.5 | 1.5 | 1.5 | 1.5 | 1.5 |
| Stearic acid | 1.0 | 1.0 | 1.0 | 1.0 | 1.0 | 1.0 | 1.0 | 1.0 |
| Zinc oxide | 1.0 | 1.0 | 1.0 | 1.0 | 1.0 | 1.0 | 1.0 | 1.0 |
| Sulfur | 0.6 | 0.6 | 0.6 | 0.6 | 0.6 | 0.6 | 0.6 | 0.6 |
| Vulcanization accelerator | 1.0 | 1.0 | 1.0 | 1.0 | 1.0 | 1.0 | 1.0 | 1.0 |
| 80°CEB(%) | 500 | 700 | 500 | 500 | 700 | 700 | 700 | 350 |
| 70°C tan $\delta$ | 0.35 | 0.25 | 0.35 | 0.35 | 0.20 | 0.20 | 0.20 | 0.13 |
| L (mm) | 1.4 | 1.4 | 1.4 | 1.4 | 1.4 | 1.1 | 0.7 | 1.4 |
| G (mm) | 13.0 | 13.0 | 8.0 | 12.0 | 10.0 | 10.0 | 10.0 | 9.0 |
| 80°CEB/70°C tan $\delta$ | 1429 | 2800 | 1429 | 1429 | 3500 | 3500 | 3500 | 2692 |
| 80°CEB/G | 38 | 54 | 63 | 42 | 70 | 70 | 70 | 39 |
| L/G | 0.11 | 0.11 | 0.18 | 0.12 | 0.14 | 0.11 | 0.07 | 0.16 |
| Crack resistance index | 87 | 89 | 91 | 89 | 96 | 97 | 100 | 95 |

From the results shown in Table 1, it can be found that crack resistance of the tire of the present invention is improved.

REFERENCE SIGNS LIST

1    Tread part
2    Cap rubber layer
4    Base rubber layer
7    Inner liner
8    Belt layer
9    Carcass
11   Band
CL   Tire equatorial plane

An object of the present invention is to provide a tire having improved crack resistance.

An object of the present invention is to provide a tire having improved crack resistance.

Provided is a tire comprising a tread and an inner liner, wherein the inner liner is formed of a rubber composition comprising a polymer component, wherein a distance G from a crown part of the tread to a tire inner cavity surface is 9.0 mm or less, wherein an elongation at break of the rubber composition measured under a condition of a temperature at 80°C and a tension rate of 3.3 mm/sec (80°CEB), a loss tangent tang $\delta$ of the rubber composition measured under a condition of a temperature at 70°C, a frequency of 10 Hz, an initial strain of 10%, and a dynamic strain of $\pm$ 2.5% (70°C tan $\delta$), and G (mm) satisfy inequalities (1) and (2) described below.

$$80°CEB/70°C \tan \delta \geq 2600 \quad \cdots \quad (1)$$

$$80°CEB/G \geq 40 \quad \cdots \quad (2)$$

**Claims**

1. A tire comprising a tread and an inner liner,

   wherein the inner liner is formed of a rubber composition comprising a polymer component,
   wherein a distance G from a crown part of the tread to a tire inner cavity surface is 9.0 mm or less,
   wherein an elongation at break of the rubber composition measured under a condition of a temperature at 80°C and a tension rate of 3.3 mm/sec (80°CEB), a loss tangent tang $\delta$ of the rubber composition measured under a condition of a temperature at 70°C, a frequency of 10 Hz, an initial strain of 10%, and a dynamic strain of $\pm$ 2.5% (70°C tan $\delta$), and G (mm) satisfy inequalities (1) and (2) described below.

$$80°CEB/70°C \tan \delta \geq 2600 \quad \cdots \quad (1)$$

$$80°CEB/G \geq 40 \quad \cdots \quad (2)$$

2. The tire of claim 1, satisfying inequality:

$$80°CEB/70°C \tan \delta \geq 3500$$

3. The tire of claim 1 or 2, comprising 10 to 45 parts by mass of a filler based on 100 parts by mass of the polymer component.

4. The tire of any one of claims 1 to 3, wherein the polymer component includes 75% by mass or more of a butyl-based rubber.

5. The tire of any one of claims 1 to 4, wherein the rubber composition comprises an aromatic-based petroleum resin.

6. The tire of any one of claims 1 to 5, wherein a total content of an isoprene-based rubber and a butadiene rubber in the polymer component is 10% by mass or less.

7. The tire of any one of claims 1 to 6, wherein, when a thickness of the inner liner on a tire equatorial plane is defined as L (mm), L/G is less than 0.10.

**Patentansprüche**

1. Reifen mit einer Lauffläche und einer Innenauskleidung,

   wobei die Innenauskleidung aus einer Kautschukzusammensetzung gebildet ist, die eine Polymerkomponente umfasst,
   wobei ein Abstand G von einem Scheitelteil der Lauffläche zu einer Reifeninnenhohlraumoberfläche 9,0 mm oder weniger beträgt,
   wobei eine Bruchdehnung der Kautschukzusammensetzung, gemessen unter einer Bedingung einer Temperatur bei 80°C und einer Spannungsrate von 3,3 mm/s (80°CEB), ein Verlusttangens tang $\delta$ der Kautschukzusammensetzung, gemessen unter einer Bedingung einer Temperatur bei 70°C, einer Frequenz von 10 Hz, einer anfänglichen Dehnung von 10% und einer dynamischen Dehnung von $\pm$ 2,5% (70°C tan $\delta$), und G (mm) die unten beschriebenen Ungleichungen (1) und (2) erfüllen.

$$80°CEB/70°C \tan \delta \geq 2600 \cdots (1)$$

$$80°CEB/G \geq 40 \cdots (2)$$

**2.** Reifen nach Anspruch 1, der die Ungleichung erfüllt:

$$80°CEB/70°C \tan \delta \geq 3500$$

**3.** Reifen nach Anspruch 1 oder 2, umfassend 10 bis 45 Masseteile eines Füllstoffs, bezogen auf 100 Masseteile der Polymerkomponente.

**4.** Reifen nach einem der Ansprüche 1 bis 3, wobei die Polymerkomponente 75 Masse-% oder mehr eines Kautschuks auf Butylbasis enthält.

**5.** Reifen nach einem der Ansprüche 1 bis 4, wobei die Kautschukzusammensetzung ein Mineralölharz auf aromatischer Basis umfasst.

**6.** Reifen nach einem der Ansprüche 1 bis 5, wobei der Gesamtgehalt eines Kautschuks auf Isoprenbasis und eines Butadienkautschuks in der Polymerkomponente 10 Masse-% oder weniger beträgt.

**7.** Reifen nach einem der Ansprüche 1 bis 6, wobei, wenn die Dicke der Innenauskleidung auf der Äquatorialebene des Reifens als L (mm) definiert ist, L/G weniger als 0,10 beträgt.


**Revendications**

**1.** Pneu comprenant une bande de roulement et un revêtement intérieur,

dans lequel le revêtement intérieur est formé d'une composition de caoutchouc comprenant un composant polymère,
dans lequel une distance G d'une partie de sommet de la bande de roulement à une surface de cavité intérieure du pneu est inférieure ou égale à 9,0 mm,
dans lequel un allongement à la rupture de la composition de caoutchouc mesuré sous une condition de température de 80°C et de taux de tension de 3,3 mm/sec (80°CEB), une tangente de perte tang $\delta$ de la composition de caoutchouc mesurée sous une condition de température de 70°C, de fréquence de 10 Hz, d'allongement initial de 10 % et d'allongement dynamique de $\pm$ 2,5 % (70°C tan $\delta$), et G (mm) satisfont aux inégalités (1) et (2) décrites ci-dessous.

$$80°CEB/70°C \tan \delta \geq 2600 \cdots (1)$$

$$80°CEB/G \geq 40 \cdots (2)$$

**2.** Pneu selon la revendication 1, satisfaisant à l'inégalité :

$$80°CEB/70°C \tan \delta \geq 3500$$

**3.** Pneu selon la revendication 1 ou 2, comprenant 10 à 45 parties en masse d'une charge sur la base de 100 parties en masse du composant polymère.

**4.** Pneu selon l'une des revendications 1 à 3, dans lequel le composant polymère comprend 75 % en masse ou plus d'un caoutchouc à base de butyle.

**5.** Pneu selon l'une des revendications 1 à 4, dans lequel la composition de caoutchouc comprend une résine de pétrole à base aromatique.

**6.** Pneu selon l'une des revendications 1 à 5, dans lequel la teneur totale en caoutchouc à base d'isoprène et en caoutchouc butadiène dans le composant polymère est de 10 % en masse ou moins.

**7.** Pneu selon l'une des revendications 1 à 6, dans lequel, lorsque une épaisseur du revêtement intérieur sur un plan équatorial du pneu est définie comme L (mm), L/G est inférieur à 0,10.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017218147 A
- JP 2005343379 A
- US 2017151834 A1
- JP 2014118108 A